# EUROPEAN PATENT APPLICATION

(11) **EP 4 586 129 A1**
(43) Date of publication of application: **16.07.2025**
(21) Application number: 24151345.6
(22) Date of filing: 11.01.2024
(51) Int. Cl.: G06F 30/27, G06F 30/367, G06F 30/373, G06F 30/398, G06F 115/12, G06F 119/10

(54) **METHOD OF ANALYZING A PRINTED CIRCUIT BOARD, SYSTEM, COMPUTER PROGRAM PRODUCT, AND COMPUTER-READABLE STORAGE MEDIUM**

(71) Applicant: TDK Management Services GmbH, 81669 Munich (DE)
(72) Inventor: Neureiter, Reinhard, 80469 Munich (DE); Nemr, Chadi, 81541 Munich (DE); Philipigh, Manfred, 81827 Munich (DE); Nelson, James, 81541 Munich (DE); De Mendizabal Vazquez, Ignacio, 81827 Munich (DE)
(74) Representative: Epping - Hermann - Fischer

(57) **Abstract**

The present disclosure relates to a method of analyzing a PCB design comprising the following steps: obtaining a PCB design file from a user, wherein the PCB design file comprises a design of a PCB; determining EMC information of the PCB based on the design of the PCB of the obtained PCB design file; analyzing the EMC information to determine whether at least one EMC issue is detected in the EMC information; determining feedback information based on a result of the analyzing of the EMC information. The disclosure further relates to a corresponding system, computer program product, and computer-readable storage medium.

## Description

This disclosure relates to a method of analyzing a printed circuit board. The disclosure further relates to a corresponding system, a corresponding computer program product, and a corresponding computer-readable storage medium.

Printed circuit boards, PCBs, are a core element of most electronic devices nowadays. Hence, a quality of an electronic device significantly depends on the qualities of its PCB(s). Improving the qualities of a PCB, therefore, can improve the qualities of a corresponding electronic device.

For the qualities of a PCB, the development process of a PCB is very important. To develop a PCB, firstly, a PCB design is drafted. Then, a prototype PCB according to the drafted PCB design is created. Afterwards, numerous tests for measuring the PCB's qualities, e.g. the PCB's electromagnetic compatibility, EMC, are conducted. Based on tests results of those tests, the PCB design is adapted to try to improve the qualities of the PCB. An adapted prototype PCB is created and tested again. This development process is commonly carried out in the form of a try-and-error approach, wherein changes to the PCB design are implemented in order to achieve better results in the tests.

The above-described state of the art of developing a PCB is rather time-consuming, requires many resources due to multiple prototype PCBs being created and tested, and causes significant cost in the development process of a PCB. Hence, it is an object of this disclosure to present a method, system, computer program product and computer-readable storage medium with which at least a part of the PCB development process may be improved.

The above-mentioned object is achieved by the subject-matter of the independent claims. Further advantageous embodiments are disclosed in the dependent claims, as well as the attached figures and the following description.

According to one aspect, a method of analyzing a PCB design comprises the following steps: obtaining a PCB design file from a user, wherein the PCB design file comprises a design of a PCB; determining EMC information of the PCB based on the design of the PCB of the obtained PCB design file; analyzing the EMC information to determine whether at least one EMC issue is detected in the EMC information; determining feedback information based on a result of the analyzing of the EMC information.

An advantage of the above method is that EMC issues may be determined during the process of designing the PCB. This way, such issues may be recognized, in particular before a prototype of the PCB is created and tested. By determining EMC issues based on the PCB design file, changes may be implemented in the PCB design before the prototype is created, thereby saving resources, saving time of the PCB development process, and saving cost of the development of a PCB.

EMC is an important topic that engineers designing PCBs must consider. EMC refers to the ability of electronic devices and systems to function properly in the presence of electromagnetic disturbances and the ability not to generate disturbances to others. EMC compliance may be a requirement for systems in a variety of applications including telecommunications, medical devices, computers, automotive industries, aerospace industries, space industries, and consumer electronics, among others. Aside that EMC compliance is an important task while bringing new products to market as it is strongly and tightly regulated by legislation and authorities. EMC compliance can affect a final product's performance, as well as its liability.

The feedback information may then be used to improve the PCB design directly, without creating and testing a prototype.

The PCB design file may be any file comprising information regarding the PCB design from which EMC information may be determined. The design of the PCB comprises information regarding PCB layers, drill holes, vias, tracks, wires, pads, mounted and/or mountable components, insulations, connectors, etc. In particular, the PCB design file may be a file of any of the following:
- a set of all gerber files, NC drills, pick and place, optionally with a Bill of Materials (BOM);
- ODB++ files;
- Native CAD data.

Of the above-mentioned file types, ODB++ files may be advantageously used since they contain EMC relevant information. Also, native CAD files may be advantageously used since they contain the most extensive PCB information of the above.

In general, the PCB design may comprise any information of one or more of the following: a layout of the PCB, schematics of the PCB, a bill of material, BOM, component characteristics, and cable harness information.

Hence, for determining the EMC information based on the design of the PCB of the obtained PCB design file, any model information in the design stage may be used to determine the EMC information:
- schematics;
- Bill of Material (BOM);
- component datasheets;
- CAD file of a housing and a system in which the PCB is to be used;
- measurement results from prototypes;
- cable harness information.

EMC information in the context of this application describes information based on which it may be determined whether and/or how strong electromagnetic radiation is emitted and/or absorbed by elements of the PCB. The EMC information comprises, for example, information regarding any of the following: a grounding of elements of the PCB, a shielding of elements of the PCB, a decoupling of elements of the PCB, a filtering of elements of the PCB, a bypassing of elements of the PCB. The EMC information comprises any information derivable from the design of the PCB, which has an influence on the EMC of the PCB as well as the overall system, in which the PCB is to be used.

For determining whether an EMC issue is detected, it may be determined whether the EMC information comprises any indication of an element of the PCB design, whose contribution to EMC may be improved by changing characteristics of the element. For example, it may be determined whether an element's EMC contribution may be changed by further grounding, shielding, decoupling, filtering, bypassing, adding additional components, removing components, changing the properties and/or characteristics of components, such as a capacitance or a type of element (types of elements being, for example, different capacitors: tantalum/ceramic/aluminum/film), and/or changing the relative position of elements to other elements in order to improve the overall EMC of the PCB design. This list, however, is not to be understood to limit the understanding of the determining whether an EMC issue is detected.

The analysis may be done, for example, by checking for potential EMC issues in the EMC information. The outcome of the analysis may be that one or more than one EMC issue is detected in the EMC information, or that no EMC issue is detected.

The feedback information in the context of this application may comprise information indicating how well EMC requirements are met by the presented PCB design, and/or the feedback information may be based on how many EMC issues were found and/or how critical regarding EMC the EMC issues that were found are. Additionally or alternatively, the feedback information may comprise direct information on what improvements with regard to EMC may be achieved in the PCB design. With other words, the feedback information may comprise information regarding changes of the PCB design with which the EMC of the PCB design may be improved. Additionally or alternatively, the feedback information may comprise information concerning an EMC certification test, e.g. whether an EMC certification test is expected to be passed or failed by the PCB design, optionally with an indication of a probability, with which the EMC certification test is expected to be passed or failed. For example, it may be indicated in the feedback information, that a certain EMC certification test is expected, with a probability of 80%, to be passed. In any case, the feedback information may be used by the user or by a data processing device to improve the PCB design with regard to EMC.

In at least one embodiment, the method further comprises:
- if at least one EMC issue is found in the EMC information: assigning a relevance value to the at least one detected EMC issue and determining whether the at least one detected EMC issue has a relevance value equal to or higher than a relevance threshold,
- wherein the determined feedback information is based on the detected EMC issues with the relevance value equal to or higher than the relevance threshold.

An advantage of this embodiment is that only significant EMC issues are considered for determining the feedback information. This way, an adaptation of the PCB design may be more efficient with regard to EMC issues which have a significant impact on EMC. Issues which have a rather low contribution to EMC and would not significantly improve the PCB design with regard to EMC if changed in the PCB design may be neglected. Unnecessary changes to the PCB design and, hence, unnecessary efforts or delay in the PCB development may be avoided.

Additionally, when a relevance value is assigned to the at least one detected EMC issue, an effort needed to change/fix an EMC issue may be considered. If, for example, an issue with a high relevance value requires a complex redesign of the board (e.g. 80% of traces to be changed), other EMC issues, even those which have a relevance value equal to or higher than the relevance threshold, may be suppressed and not shown to the user, as the complex redesign may invalidate these detections in a later iteration/analysis. This way, unnecessary efforts or delay in the PCB development may further be avoided.

According to at least one embodiment, the determining EMC information is performed by a static determination algorithm implemented on a computing device or by a machine learning determination algorithm implemented on a computing device; and/or the analyzing the EMC information to determine whether at least one EMC issue is detected in the EMC information is performed by a static analysis algorithm implemented on a computing device or by a machine learning analysis algorithm implemented on a computing device; and/or the determining feedback information is performed by a static feedback algorithm implemented on a computing device or by a machine learning feedback algorithm implemented on a computing device.

Performing the above steps with a static algorithm may be the easiest and cheapest solution. However, the results for determining the feedback information may have lower accuracy compared with an ML algorithm.

Using an ML algorithm for the above-mentioned steps may be an efficient solution in which good results for determining the feedback information may be achieved, which may constantly improved in case the respective ML algorithm(s) are further trained.

Any combination of static algorithm and ML algorithm for performing the above-mentioned steps may be chosen.

According to at least one embodiment, if any of the determining EMC information and/or the analyzing the EMC information and/or the determining feedback information is performed by the respective machine learning algorithm, the method further comprises: training the respective machine learning algorithm based on expert information and/or user information and/or background information.

An advantage thereof is that an accuracy of the feedback information may further be improved this way. Therefore, better recommendations on how to improve the PCB design may be made. Expert information may be information provided by a human expert. User information may comprise information that is provided by the user, for example after the user received the feedback information. Background information may be any information regarding EMC, for example obtained from the internet or any other information source accessible by a data processing device.

According to at least one embodiment, the feedback information comprises a PCB health score comprising at least three health score levels, and/or wherein the feedback information comprises a probability whether an EMC certification test will be passed or not, and/or the feedback information comprises suggestions that reduce a number of EMC issues in the EMC information and/or reduce a severity of the EMC issues in the EMC information.

The PCB health score may be a convenient, easily understandable way of providing the feedback information, e.g. based on a color scheme (greed for "good" / "no EMC issues or only EMC issues of low relevance were found", yellow for "could be improved", and red for "has to be improved" / "would not pass EMC regulations" / etc.). The probability whether an EMC certification test will be passed or not provides a convenient basis for a decision of a user whether changes of the PCB design are necessary or not. The suggestions for reducing a number or severity of EMC issues may allow a more detailed opportunity for providing feedback. Any one or any combination of the aforementioned may be used for providing the feedback information. The suggestions may comprise generic suggestions such as "additional shielding" or "additional filtering" or "additional bypassing" or "additional grounding" may improve the EMC characteristics of the PCB. Additionally or alternatively, the suggestions may also comprise specific suggestions such as "additional shielding of wire XY" or "additional grounding of component XZ" etc. may be provided. Such feedback information may provide even better indications for the user how the PCB design may be improved with regard to EMC. Any combination of the above-discussed feedback information may of course be provided.

According to at least one embodiment, the method further comprises determining at least one redesign of at least one part of the design of the PCB based on the feedback information; and outputting at least one updated PCB design file comprising the redesigned at least one part of the design of the PCB.

An advantage thereof is that the user may directly be provided with an updated PCB design file comprising an improvement of the PCB design with which EMC is improved.

According to at least one embodiment at least two redesigns of the at least one part of the design of the PCB are determined.

An advantage thereof is that different options on how to improve EMC of the user's PCB design may be provided to the user. The user may then decide, based on a user's preference, which option the user choses. For example, additionally an EMC score may be assigned to each redesign, wherein the EMC score is an indicator for how much EMC of the PCB design may be improved by each respective redesign. A redesign option with a higher EMC score, for example, provides a better EMC improvement than a redesign option with a lower EMC score. The EMC score may also be used to determine PCB designing skills of the user. For example, if a user achieves low EMC scores, the user can conclude that he may have a skill deficit in developing PCB designs. If the EMC score achieved by PCB designs of the user increase, however, over time, it proves that the user is improving his or her PCB designing skills. Additional trainings may be offered to and booked by users in order to increase their PCB design skills. The aforementioned may also be used, for example, by managers who want to support their employees in improving their PCB design skills. The assigning of EMC scores may also be done independently of the determining of at least two redesigns of the at least one part of the design of the PCB.

According to at least one embodiment, the method further comprises establishing a communication channel between the user and an expert.

An advantage thereof is that additional information may be efficiently provided to the user. The expert may be a human expert and/or a chatbot expert.

According to at least one embodiment, the determining EMC information comprises at least one of the following: determining shielding information of at least one part of the PCB, determining grounding information of at least one part of the PCB, determining filtering information of at least one part of the PCB, determining bypassing information of at least one part of the PCB, determining signal integrity information of at least one part of the PCB, determining Power Delivery Network information of at least one part of the PCB, determining emissions information of at least one part of the PCB, determining immunity information of at least one part of the PCB.

The determining EMC information may be based on determining what changes may be made in the PCB design or overall system, by which EMC of the PCB or overall system may be improved. Those changes including, for example: grounding, shielding, decoupling, filtering, bypassing of components, adding additional components, removing components, changing the properties and/or characteristics of components, such as a capacitance or a type of element (types of elements being, for example, different capacitors:
tantalum/ceramic/aluminum/film), and/or changing the relative position of elements to other elements.

An advantage thereof is that shielding, grounding, filtering bypassing, signal integrity information, Power Delivery Network information, emissions information, and immunity information are significantly impacting EMC of a PCB. Hence, by determining any one or any combination of two or more of the above, a meaningful evaluation of EMC of a PCB based on the PCB design may be determined.

According to at least one embodiment, the determining feedback information comprises at least one of the following: determining an improved shielding technique of at least one part of the PCB, determining an improved grounding technique of at least one part of the PCB, determining an improved filtering technique of at least one part of the PCB, and determining an improved bypassing technique of at least one part of the PCB.

An advantage thereof is that shielding, grounding, filtering and bypassing are significantly impacting EMC of a PCB. Hence, by providing improved techniques of any one or a combination of any two or more of the above techniques, a significant improvement of the EMC characteristics of the PCB design may be obtained.

According to at least one embodiment, the method further comprises:
- adapting the PCB design according to the feedback information; and
- iteratively repeating the steps of determining the EMC information of the PCB, analyzing the EMC information and determining feedback information with the step of adapting the PCB design.

An advantage thereof is that EMC characteristics of the PCB design may be continuously improved with each iteration of adapting the PCB design and then determining /analyzing/ determining feedback information. This embodiment may be implemented with only one iteration or with more than one iteration. The adapting may be performed by the user or by the entity which performs the determining EMC information, analyzing the EMC information, and determining feedback information.

According to at least one embodiment, the analyzing the EMC information to determine whether at least one EMC issue is detected in the EMC information is further based on at least one of the following:
- an application case requirement for the PCB;
- country information;
- housing information;
- cabling information
- information concerning other PCBs of a system in which the PCB is to be used;
- measurement results from prototypes;
- information concerning previous design revisions;
- expertise information of a design engineer of the PCB.

An advantage of considering any one or any combination of the above additional information is that a relevance of the feedback information may be improved in that accuracy of the analysis of the EMC information to determine whether one or more EMC issues exist may be improved.

Depending on application cases, EMC requirements may have stricter or less strict requirements and EMC information which might relate to an EMC issue, for example in an aerospace use case, may not be considered an EMC issue in consumer electronics. Furthermore, different countries may have different rules with regard to EMC issues. Accordingly, considering country information, e.g. whether a certification test of a PCB should be passed in a certain country, may be considered to determine whether an EMC issue exists or not. Moreover, a housing of a device in which the PCB is to be used, cabling, and other PCBs in a system in which the designed PCB is to be used may have an impact on the PCB design which is to be analyzed as well. Hence, considering those may increase accuracy of the analysis of the EMC information with regard to possible EMC issues. Furthermore, since users tend to repeat errors when designing PCBs, it may be advantageous to consider expertise information of a design engineer of the PCB, e.g., providing information regarding a skill level of the user or regarding previously determined EMC issues of said user.

The method may be a computer implemented method.

According to another aspect, a system for analyzing a PCB design is disclosed. The system comprises a data processing device, wherein the data processing device is configured to obtain a PCB design file from a user, wherein the PCB design file comprises a design of a PCB. The data processing device is further configured to determine electromagnetic compatibility, EMC, information of the PCB based on the design of the PCB of the obtained PCB design file and to analyze the EMC information to determine whether at least one EMC issue is detected in the EMC information. The data processing device is further configured to determining feedback information based on a result of the analyzing of the EMC information.

Advantages and embodiments of the system correspond, in general, to those discussed above regarding the corresponding method. For the sake of a concise description, the above discussed advantages and embodiments are not repeated herein, however may equally apply to the system as well.

According to at least one embodiment, the system further comprises a user device, wherein the user device is connected with the data processing device and the user device is configured to:
- send the PCB design file to the data processing device via the network, and/or
- provide user information to the data processing device.

An advantage thereof is that this provides an efficient and convenient way for the user to provide the PCB design file and/or the user information to the data processing device. The user device may be, for example, a desktop computer, a laptop, a tablet computer, a smartphone, or any other device capable of implementing the above. The data processing device may be, for example, a desktop computer, a server, a cloud server, a virtual machine, or any other device capable of implementing the above features disclosed regarding the data processing device. User device and data processing device may be physically separated units, which may be connected via a network. The network may be, for example, the Internet. Alternatively, the user device and the data processing device may be implemented in one unit, for example in a computing device of the user, on which corresponding software may be locally installed to implement both devices in the same unit. According to at least one embodiment, the user device is further configured to run a user application which is used by the user to send the PCB design file to the data processing device and/or to provide the user information to the data processing device.

An advantage thereof is that this provides an efficient and convenient way for the user to provide the PCB design file and/or the user information to the data processing device. The user application may be, for example, an application installed on the user device, or may be an application, which provides access for the user to an interface to the data processing device, for example in form of a web application, to provide the above-mentioned file/information to the data processing device.

According to at least one embodiment, the system further comprises an expert device, wherein the expert device is configured to run an expert application via which expert information and/or background information may be provided to the data processing device.

An advantage thereof is that this provides an efficient and convenient way to provide the expert information and/or background information to the data processing device. The expert device may be any of a desktop computer, a server, a cloud server, a virtual machine, a laptop, a tablet computer, a smartphone, or any other device capable of implementing the above features disclosed regarding the expert device. The expert device may be an independent device or may be integrated in the data processing device. Alternatively, the expert device may also be embedded into other applications, like design systems or simulation systems to directly communicate with the expert device without having to leave the tool-chain of the user in the design process (e.g., the expert device may be implemented as a plugin in a CAD tool).

According to yet another aspect, a computer program product comprises instructions which, when executed on a computing device, implements the above-discussed method or any embodiment(s) thereof.

According to yet another aspect, a computer-readable storage medium comprises the above-mentioned computer program product.

Advantages and embodiments of the computer program product and the computer-readable storage medium correspond, in general, to those discussed above regarding the corresponding method and system. For the sake of a concise description, the above discussed advantages and embodiments are not repeated herein, however may equally apply to the computer program product and the computer-readable storage medium.

Further advantageous embodiments are disclosed in the attached figures, the description thereof, and the attached claims. In the figures, entities with in general the same function may be indicated having the same reference number. Those entities having the same reference numbers, however, may slightly differ from each other and do not have to be identical in all detail.
- Figure 1: shows a method of analyzing a PCB design according to one embodiment of the application;
- Figure 2: shows a system for analyzing a PCB design according to one embodiment of the application;
- Figure 3: shows a method of analyzing a PCB design according to another embodiment of the application;
- Figure 4: shows a system for analyzing a PCB design according to another embodiment of the application;
- Figure 5: shows a system for analyzing a PCB design according to another embodiment of the application;
- Figure 6: shows a user device according to one embodiment of the application; and
- Figure 7: shows feedback information according to one embodiment of the application.

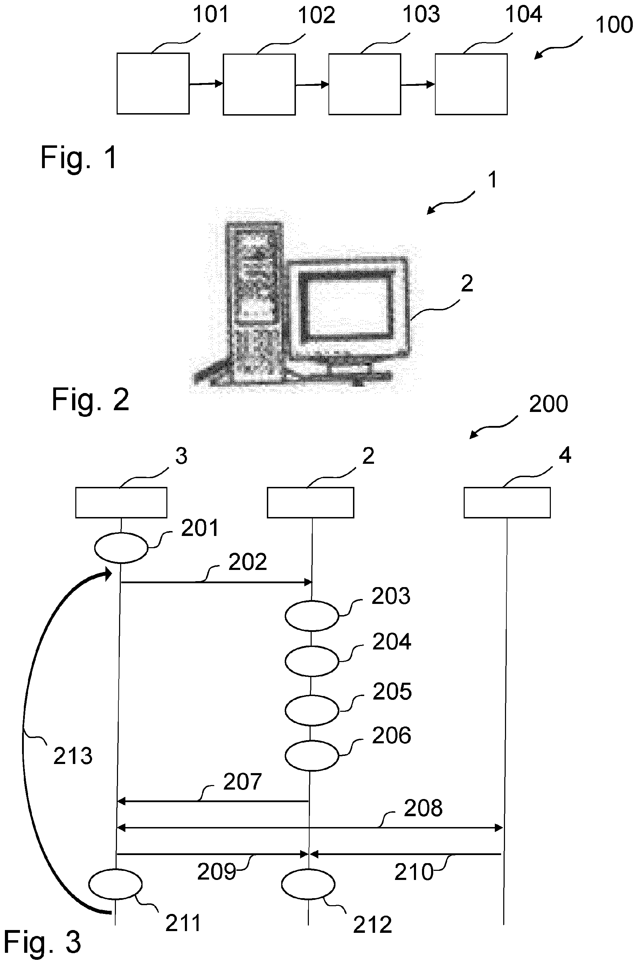

Figure 1 shows a method 100 of analyzing a PCB design according to one embodiment of the application.

In a step 101, a PCB design file is obtained from a user, wherein the PCB design file comprises a design of a PCB, which is to be analyzed with this method.

The PCB design file may be any file comprising information regarding the PCB design. The design of the PCB comprises information regarding PCB layers, drill holes, vias, tracks, wires, pads, mounted and/or mountable components, insulations, connectors, etc. In particular, the PCB design file may be a file of any of the following formats: a Gerber file, a ODB++ file, an NC drill file or a pick and place file.

In a step 102, EMC information of the PCB is determined based on the design of the PCB of the obtained PCB design file.

EMC information in the context of this application describes information based on which it may be determined whether and/or how strong electromagnetic radiation is emitted and/or absorbed by elements of the PCB and/or the overall system. It further describes information relating to conducted emissions, immunity (radiated and conducted), electrostatic discharge (ESD), power integrity, and signal integrity of the PCB and/or the overall system. The EMC information comprises, for example, information regarding any of the following: a grounding of elements of the PCB, a shielding of elements of the PCB, a decoupling of elements of the PCB, a filtering of elements of the PCB, a bypassing of elements of the PCB. The EMC information comprises any information derivable from the design of the PCB, which has an influence on the EMC of the PCB.

In a step 103, the EMC information is analyzed to determine whether at least one EMC issue is detected in the EMC information.

For determining whether an EMC issue is detected, it may be determined whether the EMC information comprises any indication of an element of the PCB design, whose contribution to EMC may be improved by changing characteristics of the element. For example, it may be determined whether an element's EMC contribution may be changed by further grounding, shielding, decoupling, filtering, and/or bypassing in order to improve the overall EMC of the PCB design.

In a step 104, feedback information is determined based on a result of the analyzing of the EMC information.

The feedback information in the context of this application may comprise an indicator of how well EMC requirements are met by the presented PCB design, and/or the feedback information may be based on how many EMC issues were found and/or how critical with regard to EMC the EMC issues that were found are. Additionally or alternatively, the feedback information may comprise direct information on what improvements with regard to EMC may be achieved in the PCB design. Additionally or alternatively, the feedback information may comprise an adapted PCB design in which the detected EMC issues are reduced or solved. In any case, the feedback information may be used by the user to improve the PCB design regarding EMC.

The method 100 as shown in Figure 1 may be implemented in any otherwise known PCB development process. EMC issues may be determined during the process of designing the PCB with this method 100. Such issues may be recognized, in particular before a prototype of the PCB is created and tested. By determining EMC issues based on the PCB design file, changes may be implemented in the PCB design before the prototype is created, thereby saving resources, saving time of the PCB development process, and saving cost of the development of a PCB.

The feedback information may then be used to improve the PCB design directly, without creating and testing a prototype.

The method 100 shown herein may be a computer implemented method. Steps 101 to 104 of the method 100 may be carried out by a data processing device, in particular being implemented by a static algorithm and/or a machine learning algorithm implemented on such data processing device. Any combination of static algorithm and ML algorithm for the implementation of the aforementioned steps is of course also possible.

Figure 2 shows a system 1 for analyzing a PCB design according to one embodiment of the application.

The system 1 comprises a data processing device 2, wherein the data processing device 2 is configured to obtain a PCB design file from a user, wherein the PCB design file comprises a design of a PCB, which is to be analyzed. The data processing device 2 is further configured to determine EMC information of the PCB based on the design of the PCB of the obtained PCB design file and to analyze the EMC information to determine whether at least one EMC issue is detected in the EMC information. The data processing device 2 is further configured to determine feedback information based on a result of the analyzing of the EMC information.

The data processing device 2 shown in Figure 2 is disclosed as a desktop or workstation computer. A skilled person, however, readily understands that any kind of data processing device being able to implement the above-mentioned features may be used. For example, the data processing device 2 may be implemented as a server, a cloud server, etc.

The data processing device 2 may be configured to implement the method 100 disclosed in Figure 1. Specifics described regarding Figure 1 are not described herein again.

The above features for which the data processing device is configured may be implemented using static algorithms and/or ML algorithms.

Figure 3 shows a method 200 of analyzing a PCB design according to another embodiment of the application. Details which have already been discussed above are not repeated herein.

In a step 201, a design of a PCB is created by a user on a user device 3 and a PCB design file comprising the design of the PCB is created. This design of the PCB and the PCB design file may be created by the user according to known techniques.

In a step 202, the PCB design file is sent to a data processing device 2 and the data processing device 2 obtains receives the PCB design file sent by the user device 3.

In a step 203, EMC information of the PCB is determined by the data processing device 2 based on the design of the PCB of the obtained PCB design file. To do so, the data processing device 2 may be configured to run a static determination algorithm or a machine learning determination algorithm.

In a step 204, the EMC information is analyzed to determine whether at least one EMC issue is detected in the EMC information. To do so, the data processing device 2 may be configured to run a static analysis algorithm or a machine learning analysis algorithm.

In a step 205, a relevance value is assigned to the at least one detected EMC issue by the data processing device 2 and the data processing device 2 determines whether the at least one detected EMC issue has a relevance value equal to or higher than a predetermined relevance threshold. The relevance value may be assigned based on stored information indicating what EMC issues are to be assigned with which relevance value, or may be assigned by a machine learning algorithm that is trained to determine a severity of a detected EMC issue.

In a step 206, feedback information is determined by the data processing device 2 based on a result of the analyzing of the EMC information. In this embodiment, the feedback information is based on the detected EMC issues with the relevance value equal to or higher than the relevance threshold. EMC issues with a relevance value lower than the relevance threshold may be neglected for the feedback information.

In a step 207, the feedback information is sent by the data processing device 2 to the user device 3. This way, the user receives the feedback information regarding how the PCB design may be improved concerning EMC on the user device 3.

Alternatively to sending the feedback information to the user device 3, the data processing device 2 may redesign at least a part of the PCB design and create an updated PCB design file based on the feedback information, the updated PCB design file comprising updates to the PCB design with which the EMC of the PCB is improved. In this case, in step 207, the updated PCB design file may be sent to the user device 3.

In a step 208, a communication channel between the user device 3 and the expert device 4 is established. This provides the user of the user device 3 with the ability to chat with a human expert or a chatbot for example.

In a step 209, user feedback information is sent from the user device 3, e.g. by the user, to the data processing device 2. This user feedback information may comprise, for example, information regarding how useful the feedback information was for improving the PCB design regarding EMC.

In a step 210, expert information is sent from the expert device 4 to the data processing device 2. This expert information may, for example, comprise review information from an expert regarding how useful the feedback information determined by the data processing device 2 was concerning EMC specifics.

In a step 211, the PCB design is adapted by the user on the user device 3 based on the feedback information received from the data processing device 2.

In a step 212, in case any of the aforementioned steps on the data processing device is performed by an ML algorithm, one or more respective ML algorithms are trained based on the user feedback information, the expert information, or background information, e.g. obtained from the Internet or another source.

The method may then be repeated starting with step 202, which is indicated by arrow 213. Thereby, an iterative improvement of the PCB design may be achieved.

The data processing device 2 and the expert device 4 are shown as separate entities in this Figure. Alternatively, however, those entities may also be understood as logical entities and may be comprised in the same physical entity, for example in the same computing device.

The order of the steps shown in this embodiment is merely exemplary and could be changed.

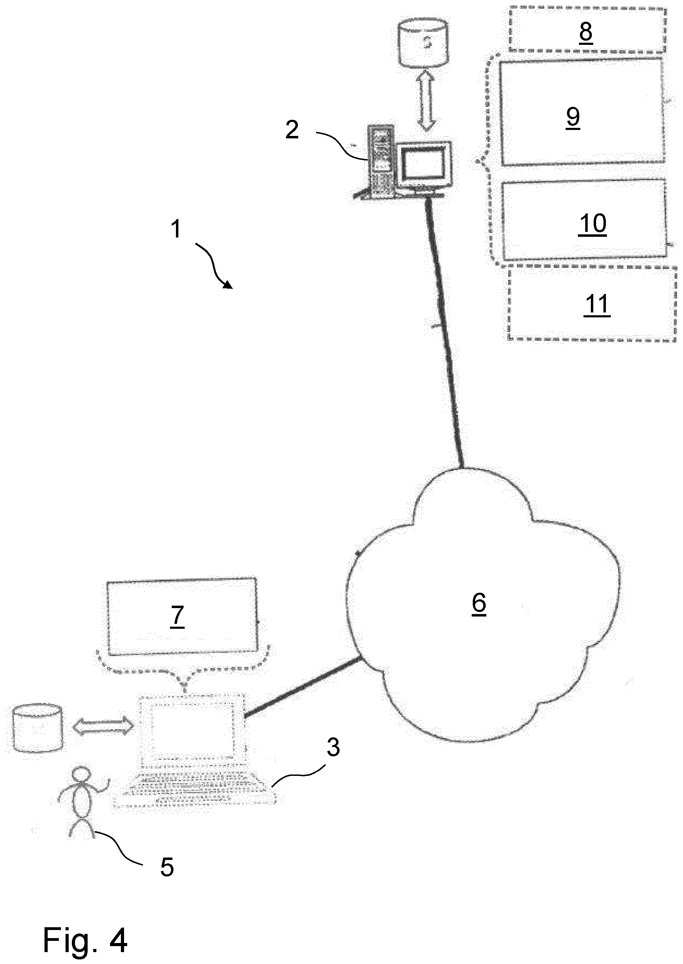

Figure 4 shows a system 1 for analyzing a PCB design according to another embodiment of the application. The system 1 comprises a data processing device 2, which may correspond to the data processing device described above, details will not be repeated herein.

The system 1 further comprises a user device 3, which is connected to the data processing device 2 via a network 6, for example the Internet. The user device 3 is running a user application 7, via which a user 5 can interact with the user device 3. For example, the user application 7 may be used by the user 5 to send/upload a PCB design file comprising a PCB design which is to be analyzed. Additionally, the user application 7 may be used to provide user information to the data processing device, to create the PCB design and PCB design file, to receive feedback information from the data processing device, and to adapt the PCB design according to the received feedback information.

The data processing device 2 comprises an EMC information determination module 8, an EMC information analysis module 9, a feedback information determination module 10, and a PCB redesign module 11. Each of those modules 8, 9, 10, 11 may be implemented using a respective static algorithm and/or a respective ML algorithm. Any combination of static and ML algorithms for the modules 8, 9, 10, 11 may be chosen.

The EMC information determination module 8 is configured to determine EMC information in the PCB design file received from the user device 3.

The EMC information analysis module 9 is configured to analyze the EMC information and to determine whether an EMC issue is present in the PCB design.

The feedback information determination module 10 is configured to determine feedback information based on a result obtained by the EMC information analysis module 9, wherein the feedback information comprises information regarding possible changes of the PCB design with which the EMC of the PCB design may be improved.

The PCB redesign module 11 is configured to redesign the PCB design comprised in the received PCB design file based on the feedback information, i.e., to redesign the PCB design in order to improve EMC of the PCB design. Alternatively or additionally to implementing the PCB redesign module 11 on the data processing device 2, the feedback information may also be sent via the network 6 to the user device 3, such that adaptations to the PCB design based on the feedback information may be carried out on the user device 3.

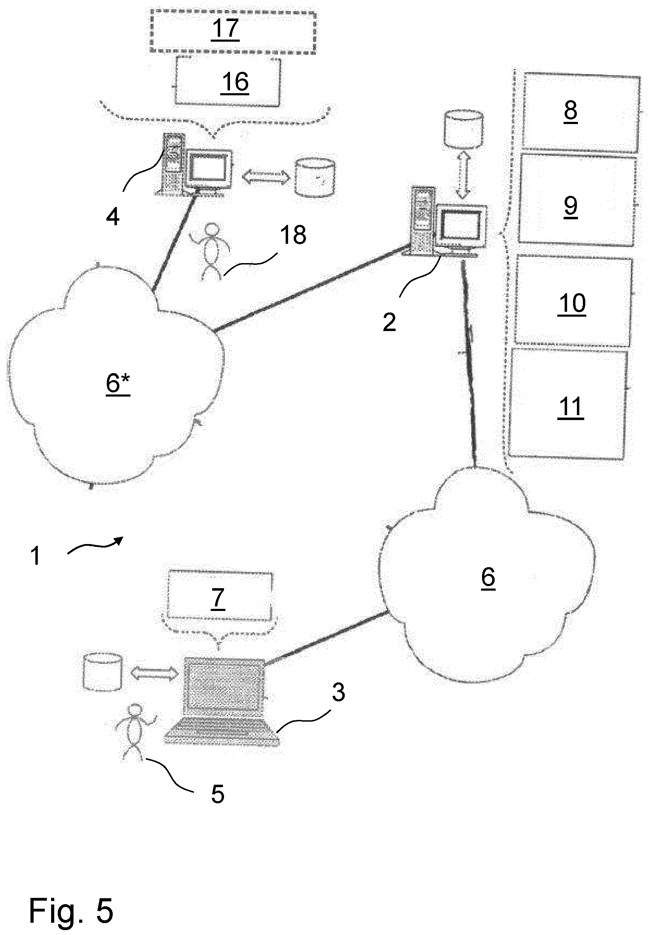

Figure 5 shows a system 1 for analyzing a PCB design according to another embodiment of the application.

The user device 3 and the data processing device 2 mainly correspond to those disclosed in Figure 4 and described above. In the following, merely differences between the embodiments shown in Figure 4 and Figure 5 are discussed in detail. With regard to the other features, it is referred to the above description.

The data processing device 2 in Figure 5, as well as in Figure 4, comprises an EMC information determination module 8, an EMC information analysis module 9, a feedback information determination module 10, and a PCB redesign module 11. Each of those modules 8, 9, 10, 11 may be implemented using a respective static algorithm and/or a respective ML algorithm. Any combination of static and ML algorithms for the modules 8, 9, 10, 11 may be chosen. Regarding further details of those modules 8, 9, 10, 11, which are already described with reference to Figure 4, it is referred to the above description thereof.

Furthermore, the system 1 according to Figure 5 comprises an expert device 4, which may in general correspond to the above-described expert device.

The expert device 4 is connected to the data processing device 2 via a network 6*, which may be the same network as the network 6 via which the user device 3 is connected to the data processing device 2, for example the Internet. The network 6*, however, may also be a different network, for example an internal network of an institution which runs the data processing device 2 and the expert device 4.

Alternatively, instead of being connected via network 6*, expert device 4 and data processing device 2 may also be implemented in the same physical entity.

The expert device 4 is running an expert application 16, via which an expert 18 may provide expert information as discussed above to the data processing device 2. The expert 18 in this context may be a human expert and/or an artificial intelligence. Alternatively or additionally, the expert application 16 in this embodiment may also be used to provide background information 17 as discussed above to the data processing device 2.

Furthermore, the expert application 16 and the user application 7 may be configured to establish a communication channel via the networks 6, 6*, allowing the user 5 to chat with the expert 18.

In both Figures 4 and 5, databases are shown being connected to the data processing device 2, the user device 3, and the expert device 4. Those databases are to indicate that those device comprise storage on which information concerning the implementation of the tasks of each device, such as corresponding algorithms, the files etc., may be stored.

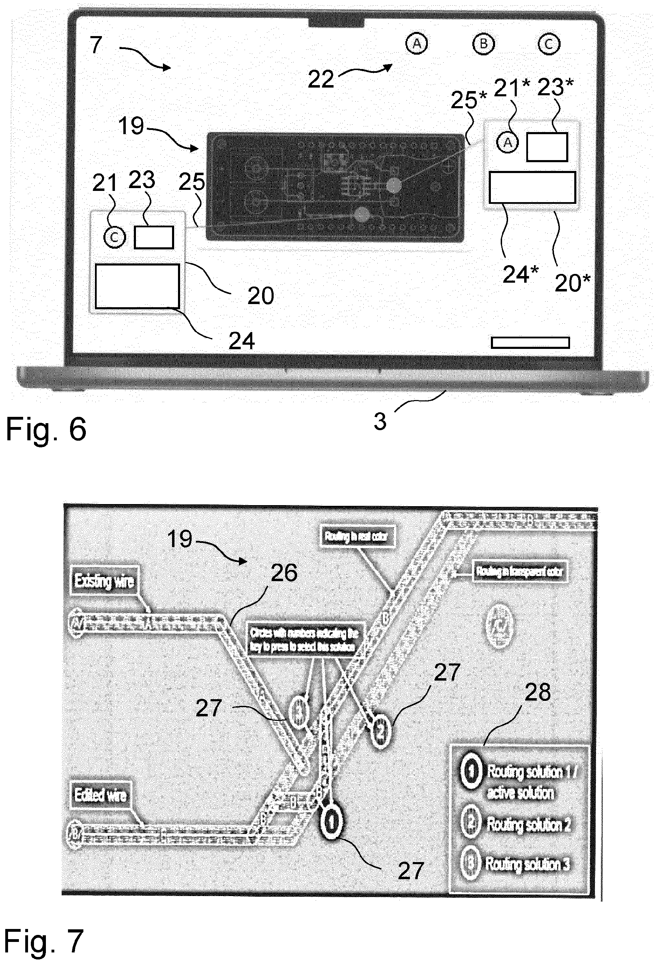

Figure 6 shows a user device 3 running a user application 7 according to one embodiment of the application. The user device 3 and the user application may correspond to those discussed already above, details thereof are not repeated herein.

In Figure 6, a PCB design 19, as it may be comprised in the PCB design file, is displayed on the user application 7.

Additionally, feedback information fields 20, 20* are displayed on the user application 7. In the feedback information fields 20, 20*, feedback information according to the above-discussed feedback information is displayed.

In the feedback information fields 20, 20*, severity indicators 21, 21* are comprised, which are used to indicate a severity of a detected EMC issue. The corresponding indicators are explained in an indicator overview 22. For example, severity indicator A corresponds to a low severity, hence indicating an EMC issue which may be improved but does not necessarily need to be improved since its impact is considered rather low. A severity indicator B corresponds to a moderate severity, hence indicating an EMC issue which may, for example, cause light disturbances and should be improved, but does not cause failures, errors, or such severe disturbances that a corresponding device might fail EMC requirements. A severity indicator C corresponds to a high severity, hence indicating an EMC issue which has to be resolved since it may cause failures, errors, or such severe disturbances that a corresponding device might fail EMC requirements. Those severity indicators 21, 21* may additionally or alternatively be color coded, e.g. displayed as red for high severity, orange for moderate severity, and yellow for low severity.

In the example shown in Figure 3, therefore, the feedback information field 20* relates to an EMC issue of low severity and the feedback information field 20 relates to an EMC issue of high severity.

The feedback information fields 20, 20* further comprise each an explanation field 23, 23* and a recommendation field 24, 24*. The explanation fields 23, 23* may comprise a brief explanation of the related EMC issue and the recommendation fields 24, 24* may comprise a brief recommendation on how the respective EMC issue may be improved or solved. Additionally, each feedback information field 20, 20* has a pointer 25, 25*, which indicates an area on the displayed PCB design 19 in which the respective EMC issue is found. This allows a user to have a quick and efficient overview and understanding of the reported EMC issue.

Figure 7 shows a part of feedback information according to one embodiment of the application. In Figure 7, a part of a PCB design 19 is displayed.

The part of the PCB design 19 displayed herein shows different wires 26 for designed routing on a PCB. The feedback information displayed in Figure 7 comprises different routing options 27, wherein three options 27-1, 27-2, and 27-3 are provided. Of those three options, option 27-1 is an active solution, and options 27-2 and 27-3 are possible alternatives, which may alternatively be used to improve or resolve EMC issues in the PCB design 19. The respective numbers of those options 27 are displayed in an option overview field 28. In this example, the numbers 1, 2, and 3 of the options 27 relate to keys which may be pressed by a user to select one of the options as an active solution, adapting the PCB design according to said solution. This allows an efficient and quick selection of an amendment of the PCB design.

### List of reference signs

- 1: system
- 2: data processing device
- 3: user device
- 4: expert device
- 5: user
- 6, 6*: network
- 7: user application
- 8: EMC information determination module
- 9: EMC information analysis module
- 10: feedback information determination module
- 11: PCB redesign module
- 16: expert application
- 17: background information
- 18: expert
- 19: PCB design
- 20, 20*: feedback information field
- 21, 21*: severity indicator
- 22: indicator overview
- 23, 23*: explanation field
- 24, 24*: recommendation field
- 25, 25*: pointer
- 26: wire
- 27: routing option
- 28: option overview field
- 100, 200: methods
- 101 to 104: steps
- 201 to 213: steps

## Claims

1. A method for analyzing a printed circuit board, PCB, design, the method comprising the following steps:
- obtaining a PCB design file from a user, wherein the PCB design file comprises a design of a PCB;
- determining electromagnetic compatibility, EMC, information of the PCB based on the design of the PCB of the obtained PCB design file;
- analyzing the EMC information to determine whether at least one EMC issue is detected in the EMC information;
- determining feedback information based on a result of the analyzing of the EMC information.

2. The method according to claim 1, wherein the method further comprises:
- if at least one EMC issue is found in the EMC information: assigning a relevance value to the at least one detected EMC issue and determining whether the at least one detected EMC issue has a relevance value equal to or higher than a relevance threshold,
- wherein the determine feedback information is based on the detected EMC issues with the relevance value equal to or higher than the relevance threshold.

3. The method according to claim 1 or 2, wherein:
- the determined EMC information is performed by a static determination algorithm implemented on a computing device or by a machine learning determination algorithm implemented on a computing device; and/or
- the analyzing the EMC information to determine whether at least one EMC issue is detected in the EMC information is performed by a static analysis algorithm implemented on a computing device or by a machine learning analysis algorithm implemented on a computing device; and/or
- the determining feedback information is performed by a static feedback algorithm implemented on a computing device or by a machine learning feedback algorithm implemented on a computing device.

4. The method according to claim 3, wherein, if any of the determining EMC information and/or the analyzing the EMC information and/or the determining feedback information is performed by the respective machine learning algorithm, the method further comprises: training the respective machine learning algorithm based on expert information and/or user information and/or background information.

5. The method according to any of claims 1 to 4, wherein the feedback information comprises a PCB health score comprising at least three health score levels, and/or wherein the feedback information comprises a probability whether an EMC certification test will be passed or not, and/or wherein the feedback information comprises suggestions that reduce a number of EMC issues in the EMC information and/or reduce a severity of the EMC issues in the EMC information.

6. The method according to any of claims 1 to 5, wherein the method further comprises:
- determining at least one redesign of at least one part of the design of the PCB based on the feedback information; and
- outputting at least one updated PCB design file comprising the redesigned at least one part of the design of the PCB.

7. The method according to claim 6, wherein at least two redesigns of the at least one part of the design of the PCB are determined.

8. The method according to any of claims 1 to 7, wherein the method further comprises establishing a communication channel between the user and an expert.

9. The method according to any of claims 1 to 8, wherein the determining EMC information comprises at least one of the following: determining shielding information of at least one part of the PCB, determining grounding information of at least one part of the PCB, determining filtering information of at least one part of the PCB, determining bypassing information of at least one part of the PCB, determining signal integrity information of at least one part of the PCB, determining Power Delivery Network information of at least one part of the PCB, determining emissions information of at least one part of the PCB, determining immunity information of at least one part of the PCB.

10. The method according to any of claims 1 to 9, wherein the determining feedback information comprises at least one of the following: determining an improved shielding technique of at least one part of the PCB, determining an improved grounding technique of at least one part of the PCB, determining an improved filtering technique of at least one part of the PCB, and determining an improved bypassing technique of at least one part of the PCB.

11. The method according to any of claims 1 to 10, wherein the method further comprises:
- adapting the PCB design according to the feedback information; and
- iteratively repeating the steps of determining the EMC information of the PCB, analyzing the EMC information and determining feedback information with the step of adapting the PCB design.

12. The method according to any of claims 1 to 11, wherein the analyzing the EMC information to determine whether at least one EMC issue is detected in the EMC information is further based on at least one of the following:
- an application case requirement for the PCB;
- country information;
- housing information;
- cabling information
- information concerning other PCBs a system in which the PCB is to be used;
- measurement results from prototypes;
- information concerning previous design revisions;
- expertise information of a design engineer of the PCB.

13. The method according to any of claims 1 to 12, wherein the method is a computer implemented method.

14. A system for analyzing a printed circuit board, PCB, design, the system comprising a data processing device, wherein the data processing device is configured to:
- obtain a PCB design file from a user, wherein the PCB design file comprises a design of a PCB;
- determine electromagnetic compatibility, EMC, information of the PCB based on the design of the PCB of the obtained PCB design file;
- analyze the EMC information to determine whether at least one EMC issue is detected in the EMC information;
- determine feedback information based on a result of the analyzing of the EMC information.

15. The system according to claim 14, wherein the system further comprises a user device, wherein the user device is connected with the data processing device and the user device is configured to:
- send the PCB design file to the data processing device via the network, and/or
- provide user information to the data processing device.

16. The system according to claim 15, wherein the user device is further configured to run a user application which is used by the user to send the PCB design file to the data processing device and/or to provide the user information to the data processing device.

17. The system according to any of claims 14 to 16, wherein the system further comprises an expert device, wherein the expert device is configured to run an expert application via which expert information and/or background information may be provided to the data processing device.

18. A computer program product comprising instructions which, when executed on a computing device, implements the method according to any of claims 1 to 13.

19. A computer-readable storage medium comprising the computer program product according to claim 18.
